# EUROPEAN PATENT SPECIFICATION

(11) **EP 3 721 744 B1**
(45) Date of publication and mention of the grant of the patent: **24.11.2021**
(21) Application number: 20163371.6
(22) Date of filing: 16.03.2020
(51) Int. Cl.: A45C 5/14, B60B 33/00

(54) **EXTRACTABLE ASSEMBLY GROUP FOR ONE WHEEL OF A LUGGAGE**
AUSZIEHBARE BAUGRUPPE FÜR EIN RAD EINES GEPÄCKSTÜCKS
GROUPE D'ASSEMBLAGE EXTRACTIBLE POUR UNE ROUE D'UN BAGAGE

(30) Priority: 19.03.2019 IT 201900003967; 30.05.2019 CN 201920799905 U
(43) Date of publication of application: 14.10.2020
(73) Proprietor: Kuvera S.p.A., 80121 Napoli (NA) (IT)
(72) Inventor: COSTA, Francesco, 81025 Marcianise (CE) (IT); PERROTTI, Marta, 80137 Napoli (IT); CIRELLA, Diletta, 80147 Napoli (IT); BARBARINO, Domenico, 80030 Roccaroinola (NA) (IT)
(74) Representative: Branca, Emanuela

(56) References cited:
- EP-A2- 2 007 241
- CN-A- 104 149 547
- CN-U- 206 101 908

## Description

The present invention relates to an extractable assembly group for one wheel of a luggage.

Luggages are known in the state of the art comprising two or more wheels mounted to the luggage by means of assembly groups. An assembly group comprises a bracket, which is fitted with a lower portion of a luggage. The bracket comprises means for rotatably mounting a fork for wheels. The fork rotatably mounts one or more wheels. Assembly groups for luggage wheels exist comprising screws for removably coupling the fork to the bracket so as to be able to assemble or disassemble the fork from the bracket. The fork mounts wheels for the luggage. The screws allow the bracket to be mounted to the fork in a fixed and safe manner.

Disadvantageously, assembly groups for luggage wheels of the prior art allow the fork to be disassembled from the bracket with difficulty, using a screwdriver to unscrew the engagement means between the fork and the bracket. Disadvantageously, a user wishing to load the luggage into a boot of a car, taking up as little space as possible, should need a long time to unscrew screws to disassemble the fork from the bracket. It is not possible to disassemble the forks from the bracket in a safe, easy and quick manner

CN104149547A discloses an extractable assembly group for at least one wheel of a luggage according to the preamble of claim 1.

An object of the present invention consists of making an extractable assembly group for a wheel of a luggage, which allows the wheels to be replaced in an easier, quicker and safer manner, allowing the extractable assembly group for the wheel to be safer and preventing the fork for the wheel from dangerously unengaging from the bracket during use of the luggage.

According to the invention such object is achieved with an extractable assembly group for one wheel of a luggage according to claim 1.

Other features are provided in the dependent claims.

The features and advantages of the present invention will be more apparent from the following description, which is to be understood as exemplifying and not limiting, with reference to the appended schematic drawings, wherein:

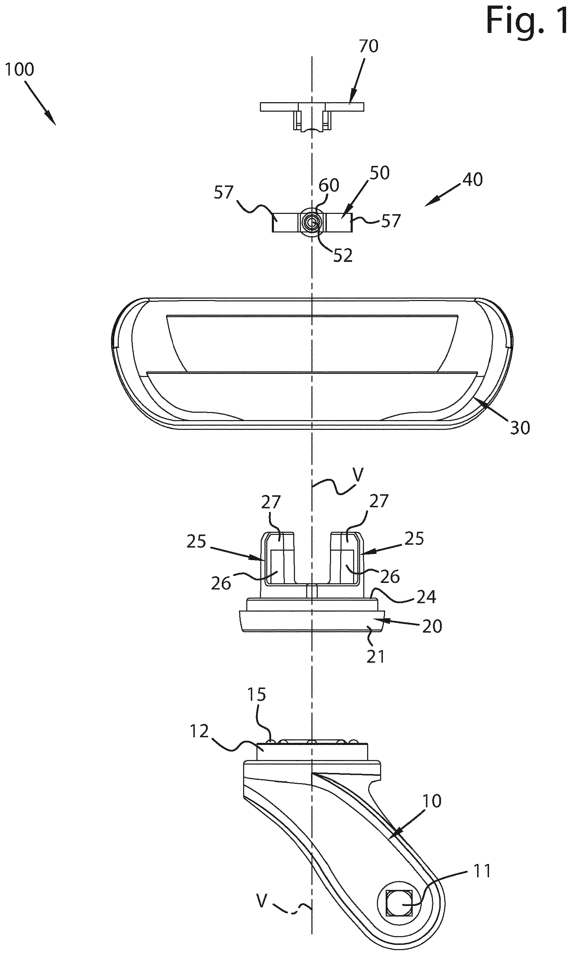

figure 1 is an exploded side plan view according to a first side of an extractable assembly group for one wheel of a luggage according to the present invention, comprising a fork adapted to rotatably mount at least one wheel, a support for said fork adapted to rotatably mount said fork, a bracket for mounting said support for said fork, a rapid engaging mechanism comprising a slider, a pushbutton and an elastic recall element, the rapid engaging mechanism is slidably mounted with said bracket and a portion of said support for said fork, a cover adapted to keep said rapid engaging mechanism in position;
figure 2 is an exploded side plan view according to a second side of the extractable assembly group for the wheel of the luggage;
figure 3 is an exploded top perspective view of the extractable assembly group for one wheel of a luggage;
figure 4 is an exploded bottom perspective view of the extractable assembly group for one wheel of a luggage;
figure 5 is a plan view of the rapid engaging mechanism in the engaging position between said support for said fork and said bracket;
figure 6 shows a top perspective view of the bracket;

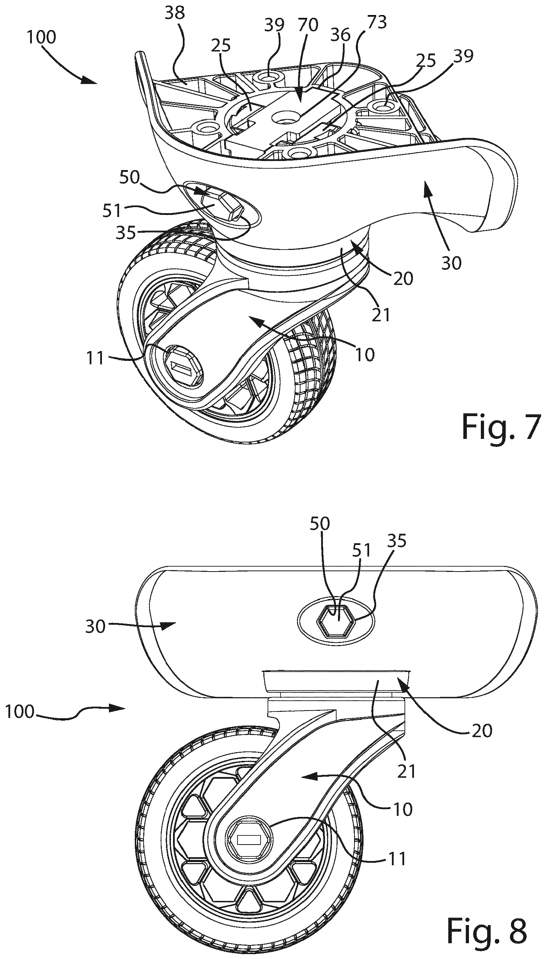

figure 7 shows a top perspective view of the extractable assembly group for one wheel of a luggage according to the present invention comprising an alternative hexagonal shape pushbutton and comprising an alternative hexagonal shape pin for rotatably mounting the wheel with the fork;
figure 8 shows a side view of the extractable assembly group of figure 7;

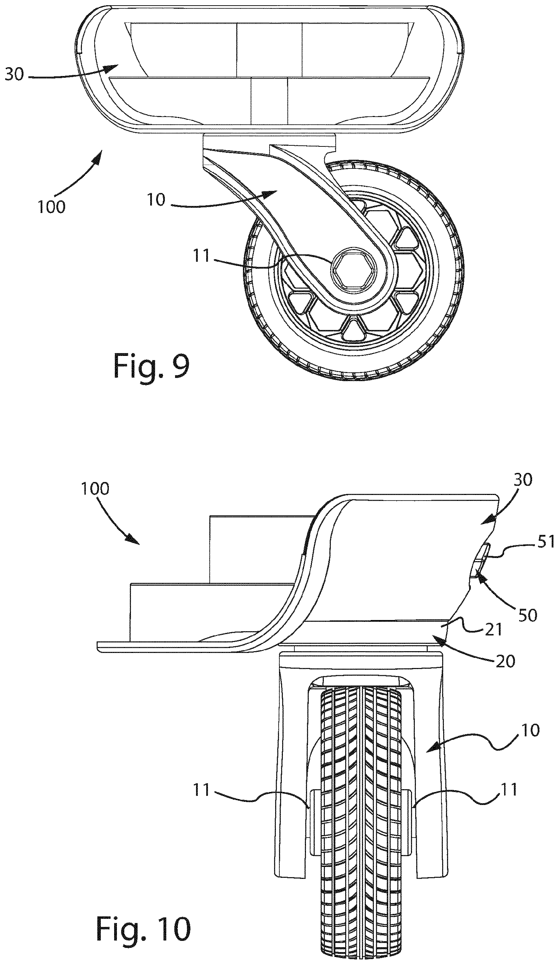

figure 9 shows an other side view of the extractable assembly group of figure 7;
figure 10 shows a front view of the extractable assembly group of figure 7;

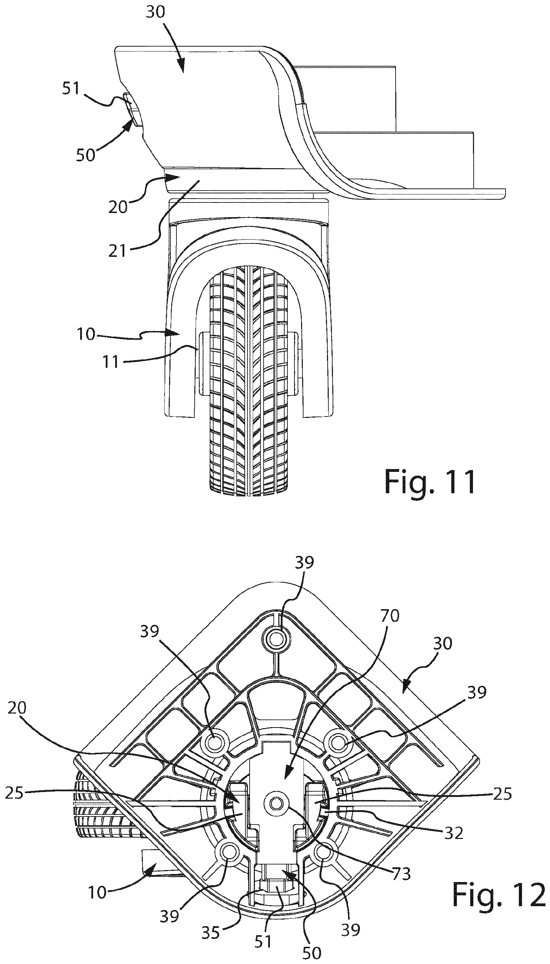

figure 11 shows a rear view of the extractable assembly group of figure 7;
figure 12 shows a plan view of the extractable assembly group of figure 7;

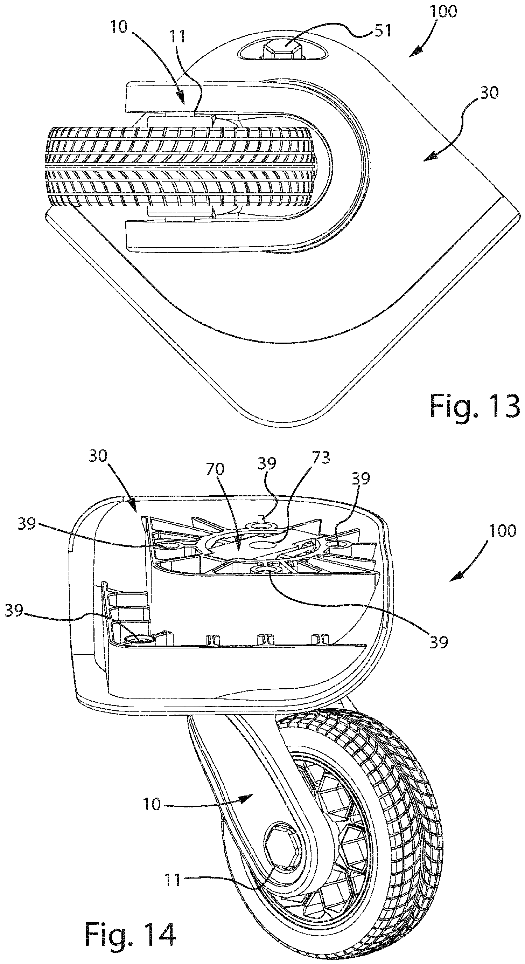

figure 13 shows a bottom view of the extractable assembly group of figure 7;
figure 14 shows a rear side top perspective view of the extractable assembly group of figure 7.

An extractable assembly group 100 for one wheel of a luggage is shown with reference to the above-mentioned figures.

The assembly group 100 comprises a fork 10 adapted to rotatably mount at least one wheel about a first geometrical axis A, a support 20 for the rotation of said fork 10 adapted to rotatably mount said fork 10 about a substantially vertical geometrical axis V, which is perpendicular to said first geometrical axis A, a bracket 30 adapted to separably mount said support 20 for said fork 10, wherein the bracket 30 is mountable with the luggage.

The bracket separably mounts said support 20 by means of an engaging mechanism 40 of the assembly group 100, which passes from an engaging position between said support 20 and said bracket 30 and an unengaging position between said support 20 and said bracket 30, which allows a separation between said support 20 and said bracket 30.

The rapid engaging mechanism 40 comprises a slider 50, a pushbutton 51 and an elastic recall element 60. The slider 50 is slidably mounted with seats of said bracket 30 and with seats of protrusions 25 of said support 20 for said fork 10, a cover 70 adapted to keep said engaging mechanism 40 in position.

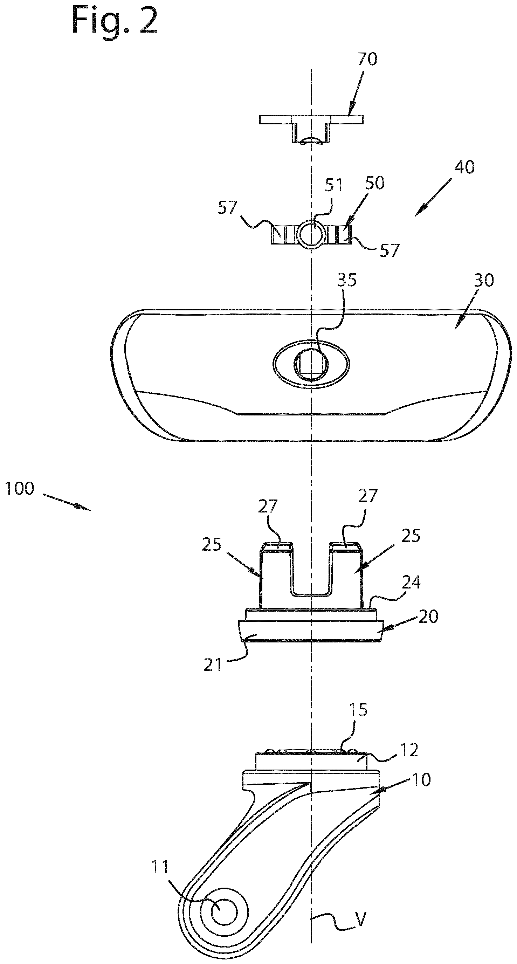

As shown in particular in figures 1-4, the fork 10 comprises two through holes 11 along the first geometrical axis of rotation A adapted to mount a rotating axis for at least one wheel of a luggage. The first geometrical axis of rotation A of the wheels will be, in normal conditions of use, substantially parallel to the ground.

The fork 10 comprises an upper portion 12 comprising a seat 15 for housing a plurality of rotation elements, such as, for example, ball-bearings and/or rotation cylinders.

The support 20 for the rotation of said fork 10 comprises a lower portion 21, which rotatably mounts the upper portion 12 of the fork 10. The lower portion 21 of the support 20 comprises a seat 23 complementary to the seat 15 of the upper portion 12 of the fork 10, which is adapted to house said plurality of rotation elements. The upper portion 12 of the fork 10 mounted with the lower portion 21 of the support 20 for the rotation of said fork 10 forms a seat 15, 23 to allow the plurality of rotation elements to rotate, so that the fork 10 can rotate with respect to the support 20 about said vertical geometrical axis V, which, with the device assembled to a luggage, in normal use, will be substantially perpendicular to the ground.

The support 20 for the rotation of said fork 10 comprises an upper portion 24 from which two protrusions 25 of the support 20 rise upwards along the vertical geometrical axis V.

The upper portion 24 of said support 20 comprises an upper face, which forms a geometrical ring, which identifies a transverse geometrical plane perpendicular to said vertical geometrical axis V, wherein the vertical geometrical axis V passes through the geometrical centre of said geometrical ring. The two protrusions 25 rise up starting from the geometrical ring of the upper face 24 upwards along two directions parallel to said vertical geometrical axis V.

Each protrusion 25 of said two protrusions 25 of the support 20 for the rotation of the fork 10 comprises a first portion 26 and a second portion 27. The first portion 26 of the protrusion 25 extends from the upper portion 24 and rises up to the second portion 27 of the protrusion 25. The second portion 27 of the protrusion 25 is an upper end of the protrusion 25. The second portion 27 of the protrusion 25 comprises at least one transverse dimension greater than at least one transverse dimension of the first portion 26 of the protrusion 25. The transverse dimensions of the first 26 and second 27 portion are measured on a geometrical plane perpendicular to the vertical geometrical axis V.

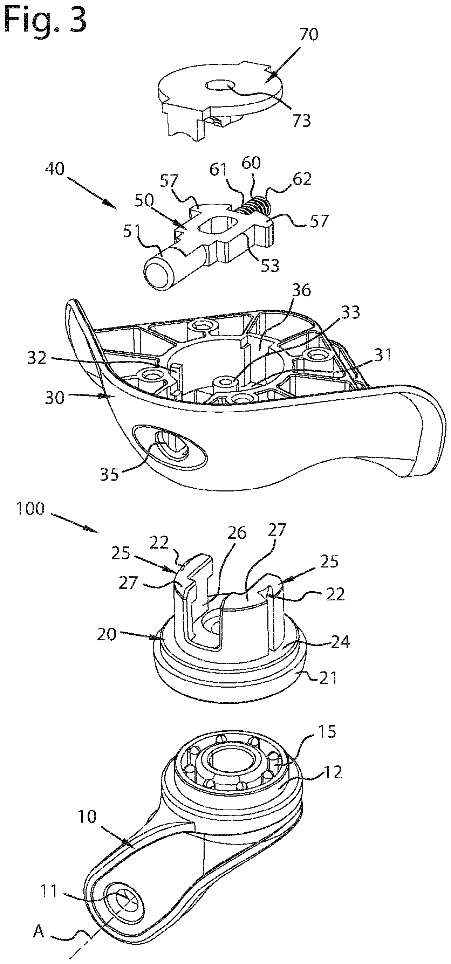

As shown in particular in figures 1 and 3, the transverse dimension of the second portion 27 of the protrusion 25, which is greater than the transverse dimension of the first portion 26 of the protrusion 25 extends towards an inner space comprised between the two protrusions 25 towards the vertical geometrical axis V. The transverse dimension of the first portion 26 of the protrusion 25 instead remains constant, the first portion 26 rising upwards along the vertical geometrical axis V.

Said at least one transverse dimension greater than the second portion 27 is an engagement means for said at least one protrusion 25.

The sliding seat of said slider 50 is identified by the space identified between different transverse dimensions of the first 26 and the second 27 portion of the protrusions 25.

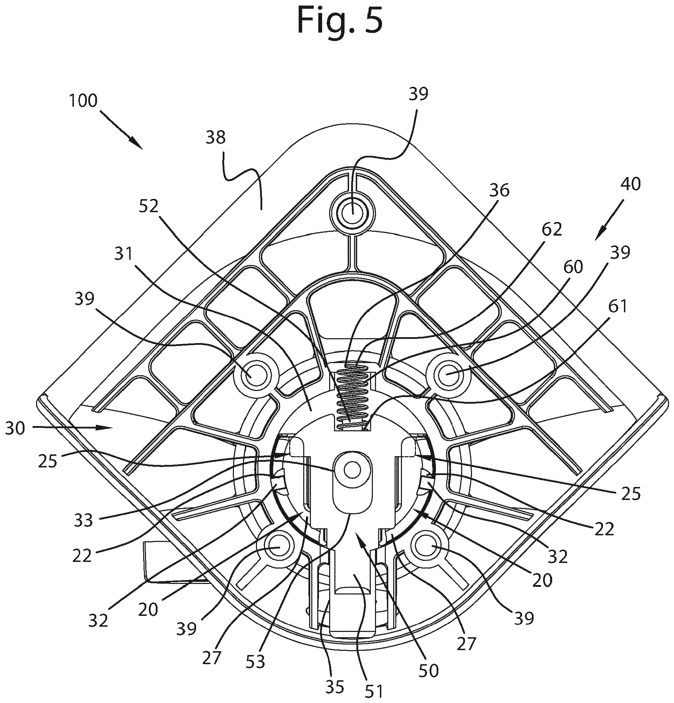

At least one of the two protrusions 25 comprises a guide member 22. As shown in particular in figures 3 and 5 the guide member 22 is provided on both protrusions 25 of the support 20. The guide member 22 is a groove hollowed out in the outer surface of the protrusion 25. The guide member 22 is arranged along a direction parallel to the vertical geometrical axis V.

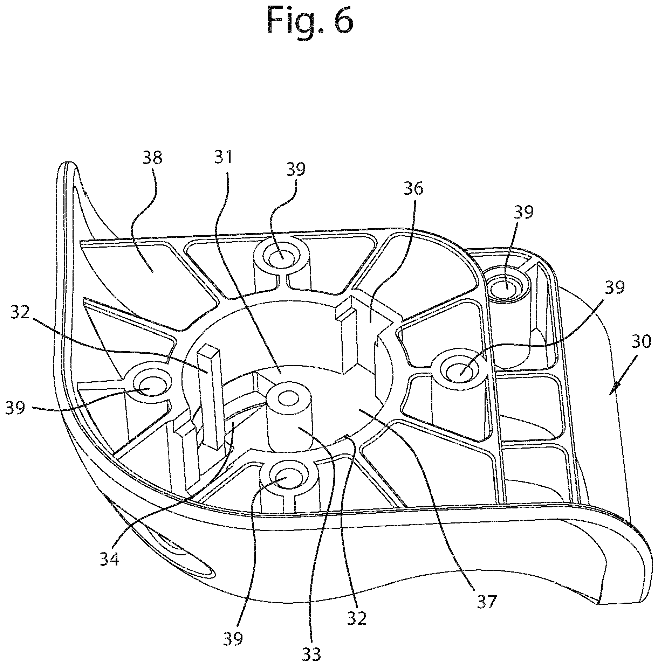

As shown in particular in figure 6, the bracket 30 comprises an upper portion 38, which is mountable with a lower portion of the luggage. The upper portion 38 comprises a plurality of seats 39 for connection elements between the bracket 30 and the luggage, such as, for example, threaded holes for fastening screws between the bracket 30 and the luggage or seats for fastening elements between the bracket 30 and the luggage. Five seats 39 for connection elements between the bracket 30 and the luggage are shown in figures 5 and 6.

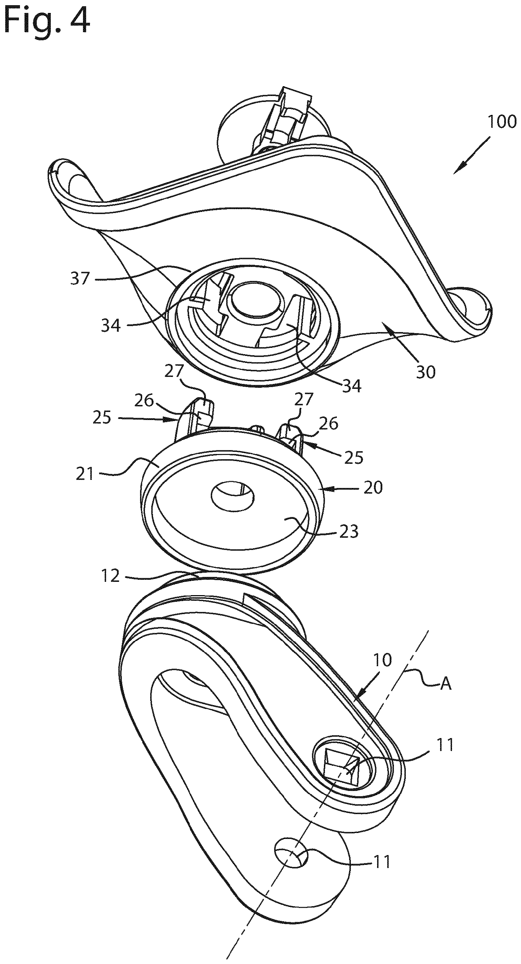

As shown in particular in figures 4 and 6 the bracket 30 comprises a lower portion 37 comprising two lower pass-through openings 34 adapted for the passage of said two protrusions 25 of the support 20 for the rotation of the fork 10.

Each pass-through opening 34 of the bracket 30 allows the passage of both the first portion 26 and the second portion 27 of the protrusion 25 of the support 20.

The protrusions 25 are inserted through the pass-through openings 34 of the bracket 30 from the bottom upwards in the direction of the vertical geometrical axis V.

When the protrusions 25 of the support 20 are inserted in the pass-through openings 34 of the bracket 30, the upper portion 24 of the support 20 is in abutment against the lower portion 37 of the bracket 30.

The slider 50 slides along a substantially perpendicular direction with respect to the vertical geometrical axis V and is adapted to cause the engaging mechanism 40 to pass from an engaging position between said support 20 and said bracket 30 and an unengaging position between said support 20 and said bracket 30, adapted to allow a separation between said support 20 and said bracket 30.

The engaging position of the engaging mechanism 40 prevents a fork 10 and support 20 group from being removed from the bracket 30.

The unengaging position of the engaging mechanism 40 allows the fork 10 and support 20 group to be removed from the bracket 30.

The first portion 26 of the protrusion 25 is a seat for a sliding of the slider 50 between the engaging position and the unengaging position of the engaging mechanism 40.

Said slider 50 comprises a portion 57, which comprises at least one transverse dimension greater than transverse dimensions of other portions of said slider 50. Said portion 57 is an engagement means for said slider 50. Transverse dimensions are measured on a geometrical plane perpendicular to said vertical geometrical axis V.

As shown in particular in figures 1-3, 5 said portion 57 of said slider 50 extends outwardly from said slider 50.

The engaging position of the engaging mechanism 40 provides for the second portion 27 of the protrusion 25 being in abutment with at least one portion of the slider 50, which serves as an engagement means so that the fork 10 and support 20 group cannot be removed from the bracket 30 sliding along the vertical geometrical axis V.

The unengaging position of the engaging mechanism 40 provides for the second portion 27 of the protrusion 25 and the slider 50 not being in abutment between each other and the fork 10 and support 20 group being able to be removed from the bracket 30 sliding in the direction of the vertical geometrical axis V downwards without interfering with the slider 50.

As shown in particular in figure 5 an upper face of the portion 57 of the slider 50 is in abutment against a lower face of the transverse dimension greater than the second portion 27 of the protrusion 25 when the slider 50 is in the engagement position, so that the support 20 cannot slide downwards along the vertical direction identified by said vertical geometrical axis V.

Said slider 50 comprises a pass-through opening 53 as shown in particular in figures 3 and 5. Said bracket 30 comprises a guide protrusion 33, which rises from an upper portion 31 of the bracket 30 upwards along the vertical geometrical axis. The guide protrusion 33 slidably mounts said slider 50, in fact, said guide protrusion 33 passes inside said pass-through opening 53 of said slider 30.

Said bracket 30 comprises a pass-through opening 35 adapted to allow at least one portion of said pushbutton 51 of said slider 50 to pass therethrough. The pushbutton 51 is slidably mounted with said pass-through opening 35 of said bracket 30. The pushbutton 51 is adapted to be pushed by a user. The pushbutton 51 is a protrusion of the slider 50, which extends along a transverse direction which is perpendicular to the direction of the vertical geometrical axis V.

The elastic recall element 60 of the slider 50 comprises a first end 61 mounted with said slider 50 and a second end 62 in abutment against a wall 36 of said bracket 30. The first end 61 of the elastic recall element 60 is mounted above a protrusion 52 of said slider 50, wherein said protrusion 52 of said slider 50 is arranged along the same transverse direction of the pushbutton 51, but toward the opposite verse. The elastic recall element 60 passes from a position of maximum elongation, which corresponds to said engagement position of the slider 50, to a position of minimum elongation, which corresponds to said disengagement position of said slider 50.

Said bracket 30 comprises two guide members 32, which engage with respective guide members 22 of the protrusions 25 of the support 20 so that the support 20 can slide in a vertical direction along the vertical geometrical axis V to be removed.

The bracket 30 comprises a cover 70 adapted to keep the slider 50 in position, also when the slider 50 is in the unengaging position. The cover 70 comprises a pass-through opening 73, which allows a screw to be screwed to keep the cover 70 and the guide protrusion 33 of the bracket 30 together. The cover 70 is in abutment with the slider 50 so as to prevent it from coming out of its seat.

As regards operation, starting from the engagement position of the slider 50, a user pushes the pushbutton 51 causing the elastic recall element 60 to pass from the position of maximum elongation to the position of minimum elongation and causing the slider 50 to pass into the disengagement position, thus allowing the protrusions 25 to slide through the lower pass-through openings 34 of the bracket 30 so that the support 20 is separated from the bracket 30.

In order to engage the support 20 with the bracket 30 again a user must push the pushbutton 51 so that there are no engagement means preventing the insertion of the protrusions 25. Once the protrusions 25 have been inserted through the lower pass-through openings 34 of the bracket 30, the user stops pushing the pushbutton 51 causing the elastic recall element 60 to pass from the position of minimum elongation to the position of maximum elongation and the slider 50 from the disengagement position to the engagement position so that engagement means 57, 27 of the slider 50 and the support 20 are mutually engaged to prevent the removal of the support 20 from the bracket 30.

Alternatively, said protrusion 25 comprises at least one alternative engagement means and said slider 50 comprises at least one alternative engagement means. Said slider passes from at least one engagement position between said at least one engagement means of said slider 50 and said at least one engagement means of said at least one protrusion 25, which corresponds to said engaging position between said support 20 and said bracket 30, and at least one disengagement position between said at least one engagement means of said slider 50 and said at least one engagement means of said at least one protrusion 25, which corresponds to said unengaging position between said support 20 and said bracket 30.

Alternatively, it is possible to provides for the protrusion 25 of the support 20 passing through the pass-through opening 53 of the slider 50 and the pass-through opening 53 of the slider 50 comprising the portion 57, which reduces the transverse dimensions of the pass-through opening 53 so that, in the engaging position, the second portion 27 of the protrusion 25 cannot pass through the pass-through opening 53, while, in the unengaging position of the slider 50, the second portion 27 of the protrusion 25 can pass through the pass-through opening 53 of the slider 50, which has greater transverse dimensions.

## Claims

1. An extractable assembly group (100) for at least one wheel of a luggage comprising
at least one fork (10) adapted to rotatably mount said at least one luggage wheel,
a support (20) for said fork (10) adapted to rotatably mount said fork (10) about a vertical geometrical axis (V),
a bracket (30) adapted to separably mount said support (20) by means of a rapid engaging mechanism (40), adapted to pass from an engaging position between said support (20) and said bracket (30) to an unengaging position between said support (20) and said bracket (30), adapted to allow a separation between said support (20) and said bracket (30),
wherein said bracket (30) is adapted to be assembled to said luggage,
wherein said support (20) comprises at least one protrusion (25), comprising at least one engagement means,
wherein said rapid engaging mechanism (40) comprises a slider (50), slidably associated to said bracket (30),
said slider (50) comprising at least one engagement means,
said slider (50) being adapted to pass from an engagement position between said at least one engagement means of said slider (50) and said at least one engagement means of said at least one protrusion (25), which corresponds to said engaging position between said support (20) and said bracket (30), to a disengagement position between said at least one engagement means of said slider (50) and said at least one engagement means of said at least one protrusion (25), which corresponds to said unengaging position between said support (20) and said bracket (30),
wherein said at least one protrusion (25), comprises a first portion (26) and a second portion (27), said second portion (27) of said at least one protrusion (25) comprising at least one transverse dimension greater than at least one transverse dimension of said first portion (26) of said at least one protrusion (25), said at least one transverse dimension of the second portion (27) is said at least one engagement means of said at least one protrusion (25), wherein transverse dimensions are measured on a geometrical plane perpendicular to said vertical geometrical axis (V),
wherein said support (20) comprises an upper portion (24) from which said at least one protrusion (25) rises upwards along a direction parallel to said vertical geometrical axis (V), said first portion (26) of said at least one protrusion (25) extends from the upper portion (24) and rises up until said second portion (27) of said at least one protrusion (25), said second portion (27) of said at least one protrusion (25) is an upper end of said at least one protrusion (25),
wherein said upper portion (24) of said support (20) comprises an upper face forming a geometrical ring which identifies a transverse geometrical plane perpendicular to said vertical geometrical axis (V), wherein the vertical geometrical axis (V) passes through the geometrical centre of said geometrical ring,
**characterised in that** said support (20) comprises two protrusions (25) of said at least one protrusion (25), said two protrusions (25) rise up starting from the geometrical ring of an upper face of the upper portion (24) upwards along two directions parallel to said vertical geometrical axis (V), each of said at least one transverse dimension greater than said second portion (27) is directed towards an inner space between said two protrusions (25).

2. The assembly group (100) according to claim 1, **characterized in that** said slider (50) comprises a portion (57), which comprises at least one transverse dimension greater than transverse dimensions of other portions of said slider (50), said portion (57) is said at least one engagement means of said slider (50), wherein transverse dimensions are measured on a geometrical plane perpendicular to said vertical geometrical axis (V).

3. The assembly group (100) according to claim 2, **characterized in that** said portion (57) of said slider (50) projects outwardly of said slider (50).

4. The assembly group (100) according to any one of claims 1-3, **characterized in that** said slider (50) comprises a pass-through opening (53), **in that** said bracket (30) comprises a guide protrusion (33), which slidably mounts said slider (50), said guide protrusion (33) passing within said pass-through opening (53) of said slider (50).

5. The assembly group (100) according to any one of claims 1-4, **characterized in that** said slider (50) comprises a pushbutton (51), said bracket (30) comprises a pass-through opening (35), said pushbutton (51) of said slider (50) is slidably mounted with said pass-through opening (35) of said bracket (30), wherein said pushbutton (51) is adapted to be pushed by a user.

6. The assembly group (100) according to any one of claims 1-5, **characterized in that** said slider (50) comprises an elastic recall element (60), comprising a first end (61) mounted with said slider (50) and a second end (62) in abutment against a wall (36) of said bracket (30), said elastic recall element (60) being adapted to pass from a position of maximum elongation, which corresponds to said engagement position of the slider (50), to a position of minimum elongation, which corresponds to said disengagement position of said slider (50).

7. The assembly group (100) according to any one of claims 1-6, **characterized in that** said bracket (30) comprises at least one lower pass-through opening (34), said at least one lower pass-through opening (34) having dimensions adapted to allow the passage of said at least one protrusion (25) of said support (20).

## Patentansprüche

1. Ausziehbare Baugruppe (100) für mindestens ein Rad eines Gepäcks, umfassend
mindestens eine Gabel (10), die geeignet ist, das mindestens eine Gepäckrad drehbar zu lagern,
einen Träger (20) für die Gabel (10), der geeignet ist, die Gabel (10) um eine vertikale geometrische Achse (V) drehbar zu lagern,
einen Bügel (30), der geeignet ist, den Träger (20) mittels eines Schnelleingriffsmechanismus (40) lösbar zu befestigen,
der geeignet ist, von einer Eingriffsposition zwischen dem Träger (20) und dem Bügel (30) in eine Freigabeposition zwischen dem Träger (20) und dem Bügel (30) überzugehen und der geeignet ist, eine Trennung zwischen dem Träger (20) und dem Bügel (30) zu ermöglichen,
wobei der Bügel (30) zur Montage an das Gepäck geeignet ist,
wobei der Träger (20) mindestens einen Vorsprung (25) aufweist, der mindestens ein Eingriffsmittel umfasst, wobei der Schnelleingriffsmechanismus (40) einen Schieber (50) umfasst, der gleitend mit dem Träger (30) verbunden ist,
wobei der Schieber (50) mindestens ein Eingriffsmittel umfasst,
wobei der Schieber (50) so ausgelegt ist, dass er von einer Eingriffsposition zwischen dem mindestens einen Eingriffsmittel des Schiebers (50) und dem mindestens einen Eingriffsmittel des mindestens einen Vorsprungs (25), die der Eingriffsposition zwischen dem Träger (20) und dem Bügel (30) entspricht, in eine Freigabeposition zwischen dem mindestens einen Eingriffsmittel des Schiebers (50) und dem mindestens einen Eingriffsmittel des mindestens einen Vorsprungs (25) übergeht, die der Freigabeposition zwischen dem Träger (20) und dem Bügel (30) entspricht,
wobei der mindestens einen Vorsprung (25) einen ersten Abschnitt (26) und einen zweiten Abschnitt (27) aufweist, wobei der zweite Abschnitt (27) des mindestens einen Vorsprungs (25) mindestens eine Querabmessung, die größer als mindestens eine Querabmessung des ersten Abschnitts (26) des mindestens einen Vorsprungs (25) ist, wobei die mindestens eine Querabmessung des zweiten Abschnitts (27) das mindestens eine Eingriffsmittel des mindestens einen Vorsprungs (25) ist, wobei Querabmessungen auf einer geometrischen Ebene senkrecht zur vertikalen geometrischen Achse (V) gemessen werden,
wobei der Träger (20) einen oberen Abschnitt (24) umfasst, von dem der mindestens eine Vorsprung (25) entlang einer Richtung parallel zu der vertikalen geometrischen Achse (V) nach oben ansteigt, wobei der erste Abschnitt (26) des mindestens einen Vorsprungs (25) sich von dem oberen Abschnitt (24) erstreckt und bis zu dem zweiten Abschnitt (27) des mindestens einen Vorsprungs (25) ansteigt, wobei der zweite Abschnitt (27) des mindestens einen Vorsprungs (25) ein oberes Ende des mindestens einen Vorsprungs (25) ist, **dadurch gekennzeichnet, dass** der obere Teil (24) des Trägers (20) eine obere Fläche aufweist, die einen geometrischen Ring bildet, der eine geometrische Querebene senkrecht zur vertikalen geometrischen Achse (V) festlegt, wobei die vertikale geometrische Achse (V) durch den geometrischen Mittelpunkt des geometrischen Rings verläuft,
**dadurch gekennzeichnet, dass**
der Träger (20) zwei Vorsprünge (25) des mindestens einen Vorsprungs (25) aufweist, wobei die beiden Vorsprünge (25) ausgehend von dem geometrischen Ring einer Oberseite des oberen Teils (24) nach oben in zwei zur vertikalen geometrischen Achse (V) parallelen Richtungen ansteigen, wobei jede der mindestens einen Querabmessung, die größer als der zweite Teil (27) ist, auf einen Innenraum zwischen den beiden Vorsprüngen (25) gerichtet ist.

2. Baugruppe (100) nach Anspruch 1, **dadurch gekennzeichnet, dass** der Schieber (50) einen Abschnitt (57) umfasst, der mindestens eine Querabmessung aufweist, die größer als die Querabmessungen anderer Abschnitte des Schiebers (50) ist, wobei der Abschnitt (57) das mindestens eine Eingriffsmittel des Schiebers (50) ist, wobei die Querabmessungen auf einer geometrischen Ebene senkrecht zu der vertikalen geometrischen Achse (V) gemessen werden.

3. Baugruppe (100) nach Anspruch 2, **dadurch gekennzeichnet, dass** der Abschnitt (57) des Schiebers (50) aus dem Schieber (50) herausragt.

4. Baugruppe (100) nach einem der Ansprüche 1 bis 3, **dadurch gekennzeichnet, dass** der Schieber (50) eine Durchgangsöffnung (53) aufweist, dass der Bügel (30) einen Führungsvorsprung (33) aufweist, der den Schieber (50) gleitend lagert, wobei der Führungsvorsprung (33) in der Durchgangsöffnung (53) des Schiebers (50) verläuft.

5. Baugruppe (100) nach einem der Ansprüche 1 bis 4, **dadurch gekennzeichnet, dass** der Schieber (50) einen Druckknopf (51) umfasst, der Bügel (30) eine Durchgangsöffnung (35) aufweist, der Druckknopf (51) des Schiebers (50) verschiebbar mit der Durchgangsöffnung (35) des Bügels (30) montiert ist, wobei der Druckknopf (51) so ausgelegt ist, dass er von einem Benutzer gedrückt werden kann.

6. Baugruppe (100) nach einem der Ansprüche 1 bis 5, **dadurch gekennzeichnet, dass** der Schieber (50) ein elastisches Rückholelement (60) umfasst, das ein erstes Ende (61), das mit dem Schieber (50) verbunden ist, und ein zweites Ende (62) umfasst, das an einer Wand (36) des Bügels (30) anliegt, wobei das elastische Rückholelement (60) so ausgelegt ist, dass es von einer Position maximaler Dehnung, die der Eingriffsposition des Schiebers (50) entspricht, in eine Position minimaler Dehnung übergeht, die der Entkupplungsposition des Schiebers (50) entspricht.

7. Baugruppe (100) nach einem der Ansprüche 1 bis 6, **dadurch gekennzeichnet, dass** der Bügel (30) mindestens eine untere Durchgangsöffnung (34) aufweist, wobei die mindestens eine untere Durchgangsöffnung (34) Abmessungen aufweist, die geeignet sind, den Durchgang des mindestens einen Vorsprungs (25) des Trägers (20) zu ermöglichen.

## Revendications

1. Groupe d'ensemble extractible (100) pour au moins une roue d'un bagage comprenant
au moins une fourche (10) conçue pour monter de manière rotative ladite au moins une roue de bagage,
un support (20) pour ladite fourche (10) conçu pour monter de manière rotative ladite fourche (10) autour d'un axe géométrique vertical (V),
une console (30) conçue pour monter de manière séparable ledit support (20) au moyen d'un mécanisme de mise en prise rapide (40),
conçu pour passer d'une position de mise en prise entre ledit support (20) et ladite console (30) à une position de désolidarisation entre ledit support (20) et ladite console (30), conçu pour permettre une séparation entre ledit support (20) et ladite console (30),
dans lequel ladite console (30) est conçue pour être assemblée sur ledit bagage,
dans lequel ledit support (20) comprend au moins une saillie (25), comprenant au moins un moyen de mise en prise,
dans lequel ledit mécanisme de mise en prise rapide (40) comprend un coulisseau (50), associé de manière coulissante à ladite console (30),
ledit coulisseau (50) comprenant au moins un moyen de mise en prise,
ledit coulisseau (50) étant conçu pour passer d'une position de mise en prise, entre ledit au moins un moyen de mise en prise dudit coulisseau (50) et ledit au moins un moyen de mise en prise de ladite au moins une saillie (25), qui correspond à ladite position de mise en prise entre ledit support (20) et ladite console (30), à une position de désolidarisation, entre ledit au moins un moyen de mise en prise dudit coulisseau (50) et ledit au moins un moyen de mise en prise de ladite au moins une saillie (25), qui correspond à ladite position de désolidarisation entre ledit support (20) et ladite console (30),
dans lequel ladite au moins une saillie (25) comprend une première partie (26) et une seconde partie (27), ladite seconde partie (27) de ladite au moins une saillie (25) comprenant au moins une
dimension transversale plus grande qu'au moins une dimension transversale de ladite première partie (26) de ladite au moins une saillie (25), ladite au moins une dimension transversale de la seconde partie (27) est ledit au moins un moyen de mise en prise de ladite au moins une saillie (25), dans lequel les dimensions transversales sont mesurées sur un plan géométrique perpendiculaire audit axe géométrique vertical (V), dans lequel ledit support (20) comprend une partie supérieure (24) à partir de laquelle ladite au moins une saillie (25) s'élève vers le haut le long d'une direction parallèle audit axe géométrique vertical (V), ladite première partie (26) de ladite au moins une saillie (25) s'étend à partir de la partie supérieure (24) et s'élève jusqu'à ladite seconde partie (27) de ladite au moins une saillie (25), ladite seconde partie (27) de ladite au moins une saillie (25) est une extrémité supérieure de ladite au moins une saillie (25),
dans lequel ladite partie supérieure (24) dudit support (20) comprend une face supérieure formant une bague géométrique qui identifie un plan géométrique transversal perpendiculaire audit axe géométrique vertical (V), dans lequel l'axe géométrique vertical (V) passe par le centre géométrique de ladite bague géométrique,
**caractérisé en ce que**
ledit support (20) comprend deux saillies (25) de ladite au moins une saillie (25), lesdites deux saillies (25) s'élèvent en commençant à partir de la bague géométrique d'une face supérieure de la partie supérieure (24) vers le haut le long de deux directions parallèles audit axe géométrique vertical (V), chacune de ladite au moins une dimension transversale plus grande que ladite seconde partie (27) est dirigée vers un espace interne entre lesdites deux saillies (25).

2. Groupe d'ensemble (100) selon la revendication 1, **caractérisé en ce que** ledit coulisseau (50) comprend une partie (57), qui comprend au moins une dimension transversale plus grande que les dimensions transversales d'autres parties dudit coulisseau (50), ladite partie (57) est ledit au moins un moyen de mise en prise dudit coulisseau (50), dans lequel les dimensions transversales sont mesurées sur un plan géométrique perpendiculaire audit axe géométrique vertical (V).

3. Groupe d'ensemble (100) selon la revendication 2, **caractérisé en ce que** ladite partie (57) dudit coulisseau (50) fait saillie vers l'extérieur dudit coulisseau (50).

4. Groupe d'ensemble (100) selon l'une quelconque des revendications 1 à 3, **caractérisé en ce que** ledit coulisseau (50) comprend une ouverture traversante (53), **en ce que** ladite console (30) comprend une saillie de guidage (33), qui monte de manière coulissante ledit coulisseau (50), ladite saillie de guidage (33) passant à l'intérieur de ladite ouverture traversante (53) dudit coulisseau (50).

5. Groupe d'ensemble (100) selon l'une quelconque des revendications 1 à 4, **caractérisé en ce que** ledit coulisseau (50) comprend un bouton-poussoir (51), ladite console (30) comprend une ouverture traversante (35), ledit bouton-poussoir (51) dudit coulisseau (50) est monté de manière coulissante avec ladite ouverture traversante (35) de ladite console (30), dans lequel ledit bouton-poussoir (51) est conçu pour être poussé par un utilisateur.

6. Groupe d'ensemble (100) selon l'une quelconque des revendications 1 à 5, **caractérisé en ce que** ledit coulisseau (50) comprend un élément de rappel élastique (60), comprenant une première extrémité (61) montée avec ledit coulisseau (50) et une seconde extrémité (62) en butée contre une paroi (36) de ladite console (30), ledit élément de rappel élastique (60) étant conçu pour passer d'une position d'élongation maximale, qui correspond à ladite position de mise en prise du coulisseau (50), à une position d'élongation minimale, qui correspond à ladite position de désolidarisation dudit coulisseau (50).

7. Groupe d'ensemble (100) selon l'une quelconque des revendications 1 à 6, **caractérisé en ce que** ladite console (30) comprend au moins une ouverture traversante inférieure (34), ladite au moins une ouverture traversante inférieure (34) ayant des dimensions conçues pour permettre le passage de ladite au moins une saillie (25) dudit support (20).
